# EUROPEAN PATENT APPLICATION

(11) **EP 2 508 722 A2**
(43) Date of publication of application: **10.10.2012**
(21) Application number: 11192929.5
(22) Date of filing: 12.12.2011
(51) Int. Cl.: F01K 23/10

(54) **System and method for increasing efficiency and water recovery of a combined cycle power plant**

(30) Priority: 23.12.2010 US 977258
(71) Applicant: General Electric Company, Schenectady, New York 12345 (US)
(72) Inventor: Tang, Ching-Jen, Niskayuna, NY New York 12309 (US); Peter, Andrew Maxwell, Niskayuna, NY New York 12309 (US); Shapiro, Andrew Philip, Niskayuna, NY New York 12309 (US); Dhingra, Harish Chandra, Friendswood, TX Texas 77546 (US); Laing, Donald Gordon, Niskayuna, NY New York 12309 (US)
(74) Representative: Cleary, Fidelma

(57) **Abstract**

A combined cycle power plant (10) includes a gas turbine (16), a condensing stage (40), a steam turbine (18), and a heat recovery steam generator (HRSG) (32). The HRSG (32) is configured to generate steam for driving the steam turbine (18) in response to heat transferred from exhaust gas received from the gas turbine (16) at a first temperature and to transmit the exhaust gas to the condensing turbine (40) at a second temperature that is lower than the first temperature.

## Description

### BACKGROUND

This invention relates generally to combined cycle plants, and more particularly to a system and method for increasing efficiency and water recovery of a combined cycle power plant using a gas turbine operated at a pressure ratio greater than about 30.

A combined cycle power plant utilizes a gas turbine and a steam turbine in combination to produce power. The power plant is arranged such that the gas turbine is thermally connected to the steam turbine through a heat recovery steam generator ("HRSG"). The HRSG is a non-contact heat exchanger that allows feedwater for the steam generation process to be heated by otherwise wasted gas turbine exhaust gases. The HRSG is always located downstream of a gas turbine in a conventional design.

A variety of techniques have been employed to reduce the size of HRSGs for combined cycle power plants. One known technique includes reducing the heat transfer surface area of the HRSG, which reduces the electrical efficiency of power plants. A variety of techniques have also been employed to recover water from the turbine exhaust gas. Some known techniques include the use of a liquid desiccant system or air-cooled condenser.

There is a need for a combined cycle power plant that provides increased electrical efficiency in a manner that is more cost effective than presently achievable with combined cycle power plants using known techniques. The HRSG for the combined cycle power plant should be smaller, resulting in reduced cost. The combined cycle power plant should also be capable of recovering water from the gas turbine exhaust gas in a more cost effective manner than combined cycle power plants presently using known techniques.

### BRIEF DESCRIPTION

The present invention resides in a combined cycle power plant comprising:
a gas turbine;
a condensing turbine;
a steam turbine; and
a heat recovery steam generator (HRSG) configured to generate steam for driving the steam turbine in response to heat transferred from exhaust gas received from the gas turbine at a first temperature and to transmit the exhaust gas to the condensing turbine at a second temperature that is lower than the first temperature.

The condensing stage may be configured to recover water from exhaust gas generated via the gas turbine, and the gas turbine, condensing stage, steam turbine and HRSG may be together configured to convert latent heat of water vapor generated from the recovered water into useful electricity.

The heat recovery steam generator (HRSG) may be connected downstream from the gas turbine and upstream from the condensing turbine in the combined cycle.

### DRAWINGS

Embodiments of the invention will now be described, by way of example only, with reference to the accompanying drawing in which:
Figure 1 illustrates a combined cycle power plant according to one embodiment; and
Figure 2 illustrates an aero derivative gas turbine combined cycle power plant according to one embodiment.

While the above-identified drawing figures set forth particular embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

### DETAILED DESCRIPTION

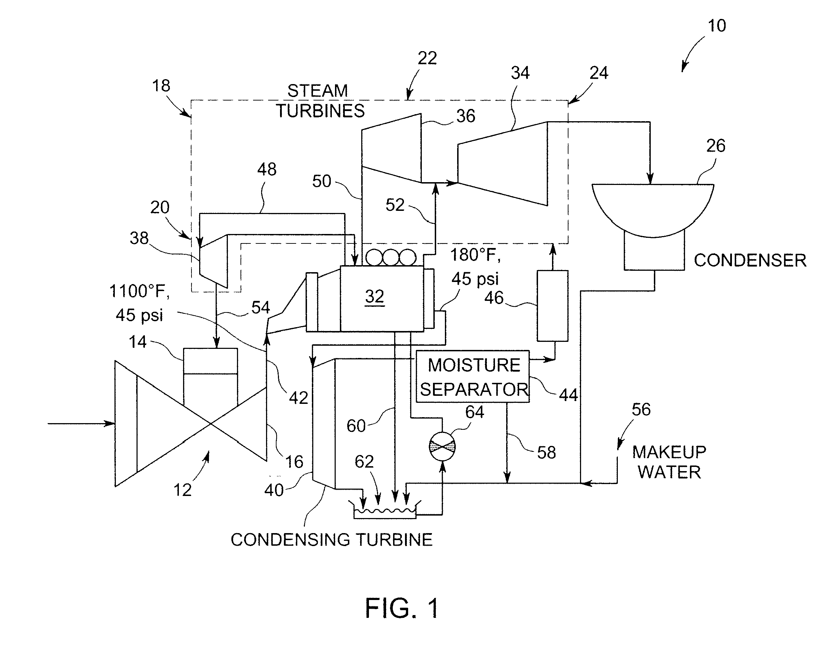

Figure 1 illustrates a combined cycle power plant 10 according to one embodiment. The power plant 10 comprises a high pressure gas turbine system 12 with a combustion system 14 and a turbine 16. The gas exiting turbine 16 may be at a pressure, for example, of about 45 psi for one particular application. The power plant 10 further comprises a steam turbine system 18. The steam turbine system 18 comprises a high pressure section 20, an intermediate pressure section 22, and one or more low pressure sections 24. The low pressure section 24 exhausts into a condenser 26.

The steam turbine system 18 is associated with a heat recovery steam generator (HRSG) 32. The HRSG 32 is a counter flow heat exchanger such that as feedwater passes there through, the water is heated as the exhaust gas from turbine 16 gives up heat and becomes cooler. The HRSG 32 has three (3) different operating pressures (high, intermediate, and low) with means for generating steam at the various pressures and temperatures as vapor feed to the corresponding stages of the steam turbine system 18. The present invention is not so limited however; and it can be appreciated that other embodiments, such as those embodiments comprising a two-pressure HRSG will also work using the principles described herein. The steam turbine system 18 may comprise, for example, a low pressure steam turbine 34, an intermediate steam turbine 36 and a high pressure turbine 38. Each section 20, 22, 24 generally comprises one or more economizer, evaporators, and superheaters.

The combined cycle power plant further comprises a low pressure condensing turbine 40. The temperature of the gas 42 exiting the high pressure turbine 16 is an optimized value based upon the particular application requirements. This temperature may be, for example, about 1100°F for one particular application. The optimized gas 42 enters the HSRG 32 to drive the bottoming cycle, where the gas is cooled down to a lower temperature that may be for example, about 180°F for one particular application. The cooled gas enters the low pressure condensing turbine 40 to produce more power. The lower pressure condensing turbine 40 expands the cooled high pressure turbine exhaust gas to about atmospheric pressure. Generally, the temperature of the gas leaving the low pressure turbine 40 is below the dew point, resulting in formation of water droplets in the outlet of the low pressure turbine 40. The wet gas exiting the low pressure turbine 40 enters a moisture separator 44 where the water is collected and where the water-depleted exhaust gas is vented to atmosphere through an exhaust gas stack 46.

The HRSG 32 uses the heat of the turbine exhaust gas 42 to produce three (s) steam streams, a high pressure steam stream 48, an intermediate pressure steam stream 50, and a low pressure steam stream 52. These three steam streams 48, 50, 52 enter the high, intermediate and low pressure steam turbines 38, 36, 34 to produce power. A high pressure steam 54 stream extracted from the high pressure steam turbine 38 is injected to the gas turbine combustor 14.

Subsequent to exiting the low pressure steam turbine, the steam stream enters the condenser 26 where the steam is condensed into liquid water. The liquid water exiting the condenser 26 along with make-up water 56 and water streams 58, 60 from the moisture separator 44 and HRSG 32 enters a water collector 62.

An appropriate amount of water is pumped 64 from the water collector 62 to the HRSG 32 where the water absorbs the heat from the high pressure gas turbine exhaust to generate the steam streams 48, 50, 52. The three steam streams 48, 50, 52 enter the steam turbines 38, 36, 34 to complete the bottoming cycle.

In summary explanation, a combined cycle power plant scheme has been described that significantly increases the efficiency of a combined cycle with a gas turbine operated at a high pressure ratio and that recovers water from the turbine exhaust gas. At least one known combined cycle is increased by at least three (3) percentage points and recovers water using a condensing turbine stage according to one aspect using the principles described herein. The HRSG is always located downstream of a gas turbine in a conventional combined cycle power plant scheme, while a HRSG is connected between a high pressure gas turbine stage and a low pressure gas turbine (condensing) stage according to embodiments described herein. Since the HRSG in the embodiments described herein recovers heat from a high pressure turbine exhaust gas to generate steam for the bottoming cycle, the size of the HRSG can be significantly reduced. According to one embodiment, the high pressure turbine exhaust gas may be about 50 psi, depending upon the particular turbine design and application. Since the bottoming cycle is driven by a turbine exhaust gas at a temperature of about 1100°F according to one embodiment, the bottoming cycle efficiency is increased above that achievable using a conventional combined cycle power plant scheme in which the bottoming cycle is driven by a turbine exhaust gas at a temperature between 700°F and 800°F. Further, the use of a low pressure (condensing) gas turbine in combination with a high pressure gas turbine using the principles described herein allows for expansion of gas leaving the HRSG and condensing of water from the exhaust gas. The embodiments described herein thus employ a condensing stage of a gas turbine to recover water from the turbine exhaust gas and to transform the latent heat of water vapor to useful electricity, leading to a higher combined cycle efficiency.

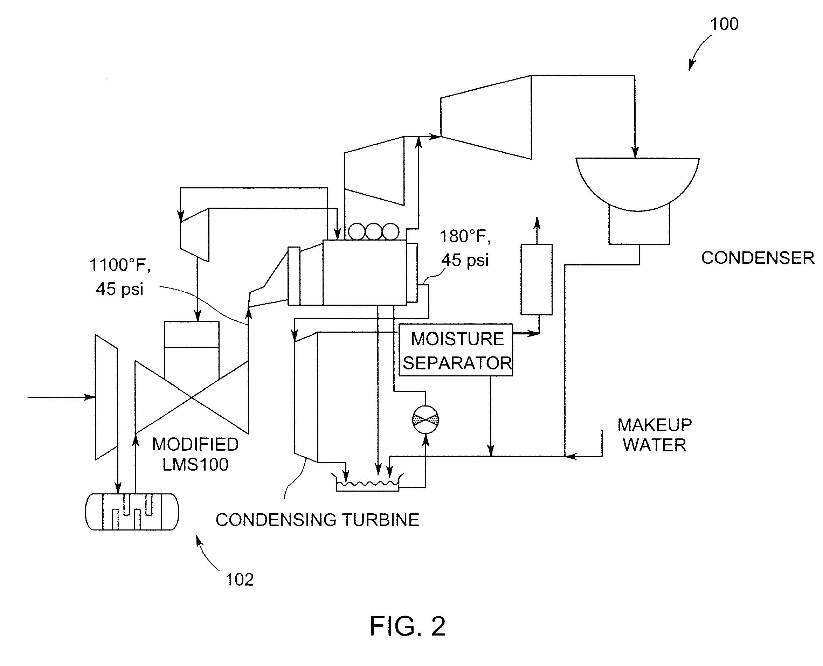

Figure 2 illustrates an aero derivative gas turbine combined cycle power plant 100 according to one embodiment. The power plant 100 is a combined cycle power plant that employs an LMS 100 gas turbine produced by General Electric Company having a place of business in Schenectady, NY. The efficiency of the LMS 100 combined cycle has been demonstrated to increase by at least three (3) percentage points and to recover water using a condensing turbine stage when employed according to the principles described herein with reference to Figure 1.

While the invention has been described in terms of various specific embodiments, those skilled in the art will recognize that the invention can be practiced with modification within the spirit and scope of the claims.

## Claims

1. A combined cycle power plant (10) comprising:
a gas turbine (16);
a condensing turbine (40);
a steam turbine (18); and
a heat recovery steam generator (HRSG) (32) configured to generate steam for driving the steam turbine (18) in response to heat transferred from exhaust gas received from the gas turbine (16) at a first temperature and to transmit the exhaust gas to the condensing turbine (40) at a second temperature that is lower than the first temperature.

2. The combined cycle power plant (10) according to claim 1, further comprising a moisture separator (44) configured to receive wet gas generated via the condensing turbine (40) and to separate water from the wet gas.

3. The combined cycle power plant (10) according to claim 2, further comprising a water collector (62) configured to collect water separated via the moisture separator (44.).

4. The combined cycle power plant according to claim 2, further comprising an exhaust gas stack configured to vent water-depleted exhaust gas generated via the moisture separator.

5. The combined cycle power plant according to any preceding claim, wherein the gas turbine comprises a high pressure ratio gas turbine.

6. The combined cycle power plant (10) according to any preceding claim, wherein the condensing turbine (40) is configured to expand the cooled gas turbine exhaust gas to about atmospheric pressure.

7. The combined cycle power plant (10) according to any preceding claim, wherein the gas turbine (16) is configured to operate at a pressure ratio greater than about thirty (30).

8. The combined cycle power plant (10) according to any preceding claim, wherein the gas turbine (16) is configured to exhaust gas at a pressure substantially higher than atmospheric pressure and further wherein the condensing turbine (40) is configured to exhaust gas at substantially atmospheric pressure.

9. A combined cycle power plant (10) any preceding claim, wherein the heat recovery steam generator (HRSG) (32) is connected downstream from the gas turbine (16) and upstream from the condensing turbine (40) in the combined cycle.

10. The combined cycle power plant (10) of any preceding claim, wherein the condensing stage (40) is configured to recover water from exhaust gas generated via the gas turbine (16), and further wherein the gas turbine (16), condensing stage (40), steam turbine (18) and HRSG (32) are together configured to convert latent heat of water vapor generated from the recovered water into useful electricity.
